# EUROPEAN PATENT SPECIFICATION

(11) **EP 3 113 482 B1**
(45) Date of publication and mention of the grant of the patent: **08.11.2023**
(21) Application number: 16158977.5
(22) Date of filing: 07.03.2016
(51) Int. Cl.: G06F 3/04842, H04N 23/63, H04N 23/661, H04N 23/80, G06F 3/0488

(54) **METHOD AND APPARATUS FOR OBTAINING VIDEO CONTENT**
VERFAHREN UND VORRICHTUNG ZUR GEWINNUNG VON VIDEOINHALT
PROCÉDÉ ET APPAREIL POUR OBTENIR UN CONTENU VIDÉO

(30) Priority: 29.06.2015 CN 201510369698
(43) Date of publication of application: 04.01.2017
(73) Proprietor: Xiaomi Inc., Beijing 100085 (CN)
(72) Inventor: LI, Feiyun, 100085 BEIJING (CN); FU, Qiang, 100085 BEIJING (CN); HOU, Enxing, 100085 BEIJING (CN)
(74) Representative: Cabinet Beau de Loménie

(56) References cited:
- WO-A1-03/067890
- JP-A- 2001 008 137
- US-A1- 2002 184 335
- US-A1- 2005 190 270
- US-A1- 2013 128 067
- US-A1- 2014 160 250
- US-A1- 2015 009 347

## Description

### TECHNICAL FIELD

The present disclosure relates to a field of video service, and more particularly to a method for obtaining a video content and an apparatus for obtaining a video content.

### BACKGROUND

More and more photographic devices (such as a camera, a camera device, etc.) are provided with a communicating module connectable to a network. Thus, the user terminal may establish a communication connection with the photographic device via the network and the video content in the photographic device may be viewed remotely via the user terminal at any time, thus bringing convenience to the user.

For example, document US2013/128067 discloses a video recording handset including a camera that relays audio and video data to and from a wireless communication device, such as a cellular-enabled wireless telephony handheld device or handset.

### SUMMARY

In order to solve the problems existing in the related art, embodiments of the present disclosure provide a method for obtaining a video content and an apparatus for obtaining a video content.

According to a first aspect of embodiments of the present disclosure, a method for obtaining a video content is provided according to appended claim 1.

By sending the first operation for obtaining the content to the photographic device, the user terminal may obtain the image or the video corresponding to the time stamp from the photographic device and the resolution of the image or the video from the photographic device is higher than the resolution of the video content displayed on the user terminal. In this way, the effect of obtaining the image or video with a higher resolution at a moment or in a period which the user is interested in may be achieved when the user views the video content with a lower resolution.

By displaying the video content with a resolution lower than that of the video content photographed by the photographic device by the user terminal, the network traffic of the user terminal may be reduced and the cost may be saved, thus improving the transmission speed of the video.

In an illustrative example, setting a resolution for a video content to be displayed comprises: receiving a second operation for selecting a resolution, in which the second operation is configured to indicate the resolution for the video content to be displayed, and setting the resolution for the video content to be displayed according to the second operation; or setting a resolution for a video content to be displayed comprises: detecting a communication mode of the user terminal; and setting the resolution for the video content to be displayed according to the communication mode.

By setting the resolution for the video to be displayed according to the second operation for selecting a resolution, the user may actively select any lower resolution as the resolution for the video to be displayed, such that the actual requirement of the user may be met. Or by setting the resolution for the video to be displayed according to the current communication mode by the user terminal, the user terminal may automatically select a lower resolution as the resolution for the video to be displayed without any operation from the user, which is convenient and easy.

In an illustrative example, obtaining the image or the video corresponding to the time stamp from the photographic device comprises: sending an address of a content to be uploaded to the photographic device, such that the photographic device uploads the image or the video corresponding to the time stamp to the address, receiving a message indicating that the content to be uploaded is successfully uploaded from the photographic device, and obtaining the image or the video corresponding to the time stamp from the address; or obtaining the image or the video corresponding to the time stamp from the photographic device comprises: receiving a message indicating that a content to be uploaded is successfully uploaded and an address of the content to be uploaded from the photographic device, in which the address indicates a position of the image or the video corresponding to the time stamp from the photographic device, and obtaining the image or the video corresponding to the time stamp from the address.

By sending the address of the content to be uploaded to the photographic device by the user terminal, and uploading by the photographic device the image or the video corresponding to the time stamp to the address, the user terminal may determine any address for the content to be uploaded, which is helpful to ensure the communication safety. Or by directly sending the address of the content to be uploaded to the user terminal by the photographic device, the user terminal is informed of the position of the image or the video corresponding to the time stamp from the photographic device, such that the procedure of obtaining the image or the video by the user terminal is simplified, and the user terminal may obtain the image of the video corresponding to the time stamp more effectively and quickly.

According to a second aspect of embodiments of the present disclosure, a method for obtaining a video content is provided according to appended claim 4. The method is applied in a photographic device.

By sending a first request for obtaining a content by the user terminal to the photographic device, the user terminal may obtain the image or the video corresponding to the time stamp from the photographic device and the resolution of the image or the video from the photographic device is higher than the resolution of the video content currently displayed on the user terminal. In this way, the effect of obtaining the image or video with a higher resolution at a moment or in a period which the user is interested in may be achieved when the user views the video content with a lower resolution.

By providing by the photographic device to the user terminal the video content with a resolution lower than that of the video content photographed by the photographic device, the network traffic of the user terminal may be reduced and the cost may be saved, thus improving the transmission speed of the video.

In an illustrative example, providing the video content corresponding to the resolution selected by the user terminal to the user terminal comprises: converting video content corresponding to the resolution of the video content photographed by the photographic device so as to obtain video content corresponding to the resolution selected by the user terminal, and providing the video content corresponding to the resolution selected by the user terminal to the user terminal.

By providing the video content of which the resolution is converted to the user terminal by the photographic device, the network traffic of the user terminal may be reduced and the cost may be saved, thus improving the transmission speed of the video.

In an illustrative example, providing the image or the video corresponding to the time stamp to the user terminal comprises: receiving an address of a content to be uploaded from the user terminal, uploading the image or the video corresponding to the time stamp to the address, and sending a message indicating that the content to be uploaded is successfully uploaded to the user terminal; Or providing the image or the video corresponding to the time stamp to the user terminal comprises: uploading the image or the video corresponding to the time stamp to an address of a content to be uploaded, in which the address indicates a position of the image or the video corresponding to the time stamp from the photographic device, and sending a message indicating that the content to be uploaded is successfully uploaded and the address to the user terminal.

By sending the address of the content to be uploaded to the photographic device by the user terminal, and uploading by the photographic device the image or the video corresponding to the time stamp to the address, the user terminal may determine any address for the content to be uploaded, which is helpful to ensure the communication safety. Or by directly sending the address of the content to be uploaded to the user terminal by the photographic device, the user terminal is informed of the position of the image or the video corresponding to the time stamp from the photographic device, such that the procedure of obtaining the image or the video by the user terminal is simplified, and the user terminal may obtain the image of the video corresponding to the time stamp more effectively and quickly.

According to a third aspect of embodiments of the present disclosure, an apparatus for obtaining a video content is provided according to appended claim 7. The apparatus is applied in a user terminal.

According to a fourth aspect of embodiments of the present disclosure, an apparatus for obtaining a video content is provided according to appended claim 8. The apparatus is applied in a user terminal.

According to a fifth aspect, the invention is also directed to a computer program for executing the steps of a method for obtaining a video content applied in a user terminal as described above when this program is executed by a computer.

And, according to a sixth aspect, the invention is also directed to a computer program for executing the steps of a method for obtaining a video content applied in a photographic device as described above when this program is executed by a computer.

These programs can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an implement environment according to an example embodiment;
Fig. 2 is a flow chart showing a method for obtaining a video content according to an example embodiment;
Fig. 3 is a flow chart showing a method for obtaining a video content according to another example embodiment;
Fig. 4 is a schematic diagram of an interface of a user terminal when the method provided in the embodiment shown in Fig. 2 or 3 is implemented;
Fig. 5 is a flow chart showing a method for obtaining a video content according to an example embodiment;
Fig. 6 is a flow chart showing a method for obtaining a video content according to another example embodiment;
Fig. 7 is a schematic diagram showing a signaling interaction between a user terminal and a photographic device according to an example embodiment of the present disclosure;
Fig. 8 is a block diagram of an apparatus for obtaining a video content according to an example embodiment;
Fig. 9 is a block diagram of an apparatus for obtaining a video content according to another example embodiment;
Figs. 10a-10b are block diagrams of an apparatus for obtaining a video content according to another example embodiment;
Figs. 11a-11b are block diagrams of an apparatus for obtaining a video content according to another example embodiment;
Fig. 12 is a block diagram of an apparatus for obtaining a video content according to an example embodiment;
Fig. 13 is a block diagram of an apparatus for obtaining a video content according to another example embodiment;
Fig. 14 is a block diagram of an apparatus for obtaining a video content according to another example embodiment;
Figs. 15a-15b are block diagrams of an apparatus for obtaining a video content according to another example embodiment; and
Fig. 16 is a block diagram of an apparatus for obtaining a video content according to an example embodiment.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

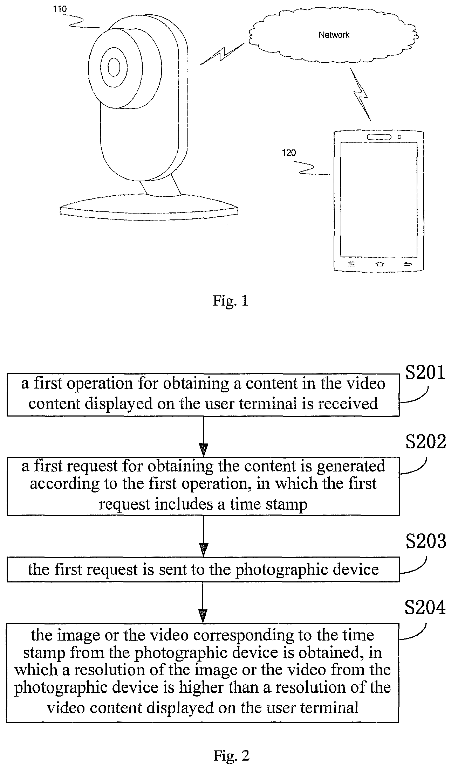

Fig. 1 is a schematic diagram of an implement environment according to an example embodiment. As shown in Fig. 1, the implement environment includes a photographic device 110 and a user terminal 120. The photographic device 110 may connect to the user terminal 120 via a network, and may communicate with the user terminal 120 via the network. The network may include, but is not limited to, WiFi (Wireless Fidelity), 2G (the 2nd generation wireless telephone technology), 3G (the 3rd generation wireless telephone technology), 4G (the 4th generation wireless telephone technology) network, etc.

The photographic device 110 may be an intelligent camera device or an intelligent camera with a storage function and a processing function. The user terminal 120 may directly obtain a video content photographed by the intelligent camera device or the intelligent camera from the intelligent camera device or the intelligent camera. Or, the photographic device 110 may include a camera and a server connected to the camera (via wireless or wired connection), and the server is configured to store and process a video content photographed by the camera. The user terminal 120 may obtain the video content photographed by the camera from the server. Thus, the operations on the camera may be simplified and the requirement for the storage ability and the processing ability of the camera is reduced. In Fig. 1, the photographic device 110 is illustrated by taking the intelligent camera as an example.

The user terminal 120 may be an intelligent phone, a tablet computer, a PC, a laptop, etc. The user terminal 120 may view the video content photographed by the photographic device 110 via the network, such that the remote video monitoring may be implemented. In Fig. 1, the user terminal 120 is illustrated by taking the intelligent phone as an example.

Fig. 2 is a flow chart showing a method for obtaining a video content according to an example embodiment. The method is applied in a user terminal, such as the user terminal 120 shown in Fig. 1. As shown in Fig. 2, the method includes following steps.

In step S201, a first operation for obtaining a content in the video content displayed on the user terminal is received.

The first operation may be used for indicating a user's intention of obtaining an image or a video in the video content currently displayed on the user terminal. The first operation may include an operation for obtaining an image and an operation for obtaining a video. For example, when the user views the video content from the photographic device and displayed on the user terminal, if the user is interested in a picture at one moment or in a period in the video content, the user may perform the operation for obtaining the image via an interactive interface of the user terminal for indicating the intention of obtaining the image corresponding to the moment or the period, or the user may perform the operation for obtaining the video via the interactive interface of the user terminal for indicating the intention of obtaining the video corresponding to the moment or the period. Then, the user terminal may receive the first operation for obtaining the content.

In step S202, a first request for obtaining the content is generated according to the first operation, in which the first request includes a time stamp and is configured to request for an image or a video corresponding to the time stamp from a photographic device photographing the video content.

For example, the time stamp may be a time when the first operation is received or a time which is defined by the user through the interactive interface of the user terminal. If the time stamp is the latter one, the user terminal receives the time which is defined by the user before generating the first request for obtaining the content, and then the time which is defined by the user is used as the time stamp and is included in the first request for obtaining the content.

In step S203, the first request is sent to the photographic device.

In step S204, the image or the video corresponding to the time stamp from the photographic device is obtained, in which a resolution of the image or the video from the photographic device is higher than a resolution of the video content displayed on the user terminal.

In one example, the image corresponding to the time stamp may include the image just at the moment indicated by the time stamp. For example, the time stamp is 20:30, the image corresponding to the time stamp may include the image at the moment 20:30.

Alternatively, the image corresponding to the time stamp may include the image just at the moment indicated by the time stamp, and images respectively at some moments before and/or after the moment indicated by the time stamp by several time units. For example, if the time stamp is 20:30, the images corresponding to the time stamp may include the image at the moment 20:30, an image at the moment 20:28, an image at the moment 20:29, and an image at the moment 20:31, and so on. In this way, the photographic device may provide some images to the user for selecting. The problem that the image which the user is interested in cannot be obtained due to the untimely first operation for obtaining the content is avoided.

In one example, the video corresponding to the time stamp may include one or more of: a video started from the time stamp and ended at a time which is some units (such as, 10 units) of time later than the time stamp; a video started from a time which is some units (such as, 10 units) of time earlier than the time stamp and ended at the time stamp; a video started from a time which is some units (such as, 5 units) of time earlier than the time stamp and ended at a time which is some units (such as, 5 units) of time later than time stamp, and so on.

As described with reference to Fig. 1, the photographic device may be an intelligent camera device or an intelligent camera with the storage function and the processing function. In this situation, the user terminal may directly obtain the image or the video corresponding to the time stamp from the intelligent camera device or the intelligent camera.

Alternatively, the photographic device may include a camera and a server connected to the camera, and the server is configured to store and process the video content photographed by the camera. In this situation, the user terminal may obtain the image or the video corresponding to the time stamp from the server.

The video content currently displayed on the user terminal is photographed by the photographic device, i.e. the video content currently displayed on the user terminal is provided by the photographic device. On the photographic device, the resolution of the video content provided to the user terminal may be recorded. After receiving the first request for obtaining the content from the user terminal, the photographic device may provide the image or the video corresponding to the time stamp and with a resolution higher than the resolution recorded.

Alternatively, the user terminal may put the resolution of the video content currently displayed in the first request for obtaining the content. After receiving the first request for obtaining the content, the photographic device may resolve the resolution of the video content currently displayed on the user terminal from the first request for obtaining the content. And then the photographic device provides the image or the video corresponding to the time stamp and with a resolution higher than the resolution resolved from the first request.

In conclusion, with the method for obtaining a video content, by sending the first request for obtaining the content to the photographic device, the user terminal may obtain the image or the video corresponding to the time stamp from the photographic device, and the resolution of the image or the video from the photographic device is higher than the resolution of the video content currently displayed on the user terminal, such that the effect of obtaining image or the video with a higher resolution at the moment or in the period which the user is interested in may be achieved when the user views the video content with a lower resolution.

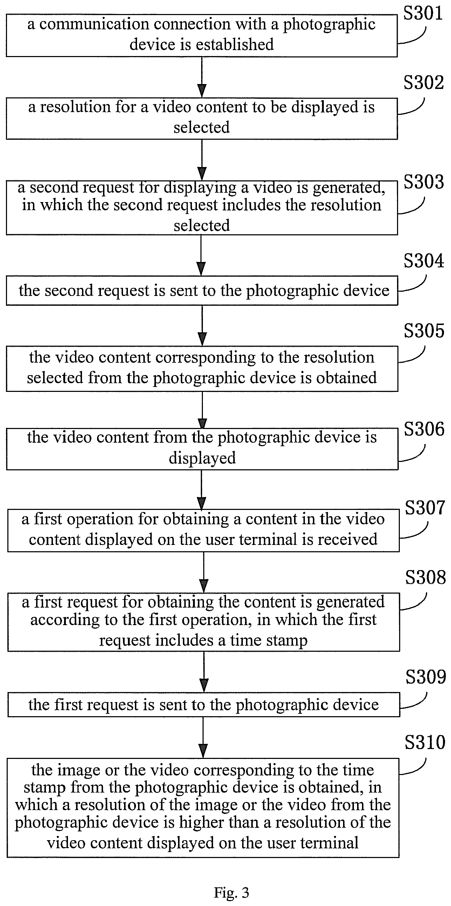

Fig. 3 is a flow chart showing a method for obtaining a video content according to another example embodiment. The method is applied in a user terminal, such as the user terminal 120 shown in Fig. 1. As shown in Fig. 3, the method includes following steps.

In step S301, a communication connection with a photographic device is established. For example, the user terminal may establish the communication connection with the photographic device via a wireless or wired technology, such as WiFi, 2G, 3G, or 4G, etc.

In step S302, a resolution for a video content to be displayed is selected. For example, the video content photographed by the photographic device may have a high resolution. For example, the high resolution may be 1080p. The resolution selected may be lower than the resolution of the video content photographed by the photographic device. For example, the resolution selected may be a standard resolution, such as 720p.

The resolution for the video content to be displayed may be selected in many ways. For example, in a first way, the user may perform a second operation for selecting the resolution on an interactive interface provided by the user terminal, in which the second operation for selecting the resolution may be used for indicating the resolution selected for the video content to be displayed. The user terminal may receive the second operation for selecting the resolution, and select the resolution for the video content to be displayed according to the second operation for selecting the resolution. In this way, the user may actively select any lower resolution (such as the standard resolution 720p) as the resolution for the video content to be displayed, thus meeting the user's actual requirement.

In a second way, the user terminal may detect its own current communication mode, and select the resolution for the video content to be displayed according to the current communication mode. For example, if the user terminal detects that the current communication mode is a communication mode consuming the user's network traffic such as 2G, 3G, or 4G etc., the user terminal may automatically select a lower resolution (such as the standard resolution 720p) as the resolution for the video content to be displayed without any operation from the user, which is simple and convenient.

In step S303, a second request for displaying a video is generated, in which the second request includes the resolution selected and is configured to request for the video content corresponding to the resolution selected from the photographic device.

In step S304, the second request is sent to the photographic device.

After receiving the second request for displaying the video, the photographic device may resolve the resolution selected by the user terminal from the second request, and then the video content corresponding to the resolution selected by the user terminal is provided to the user terminal.

In step S305, the video content corresponding to the resolution selected from the photographic device is obtained.

As described with reference to Fig. 1, the photographic device may be an intelligent camera device or an intelligent camera with the storage function and the processing function. In this situation, the user terminal may directly obtain the video content corresponding to the resolution selected from the intelligent camera device or the intelligent camera.

Alternatively, the photographic device may include a camera and a server connected to the camera, and the server is configured to store and process the video content photographed by the camera. In this situation, the user terminal may obtain the video content corresponding to the resolution selected by the user terminal from the server.

In step S306, the video content from the photographic device is displayed. At this time, the video content displayed on the user terminal is the video content corresponding to the resolution selected by the user terminal.

By displaying the video content with a resolution lower than that of the video content photographed by the photographic device by the user terminal, the network traffic of the user terminal is reduced and the cost may be saved, thus improving the transmission speed of the video.

In step S307, a first operation for obtaining a content in the video content displayed on the user terminal is received.

In step S308, a first request for obtaining the content is generated according to the first operation, in which the first request includes a time stamp and is configured to request for an image or a video corresponding to the time stamp from a photographic device photographing the video content.

In step S309, the first request is sent to the photographic device.

In step S310, the image or the video corresponding to the time stamp from the photographic device is obtained, in which a resolution of the image or the video from the photographic device is higher than a resolution of the video content displayed on the user terminal.

The steps S307-310 are the same to the steps S201-S204, which are not described herein.

In step S204 or S310, the user terminal may obtain the image or the video corresponding to the time stamp from the photographic device in many ways. For example, in a first way, the user terminal may send an address of a content to be uploaded to the photographic device, such that the photographic device uploads the image or the video corresponding to the time stamp to the address. The address may be an address such as URL (Uniform Resource Locator). And then, the user terminal may receive a message indicating that the content to be uploaded is successfully uploaded from the photographic device. The message may indicate that the image or the video corresponding to the time stamp is successfully uploaded to the address by the photographic device. And then, the user terminal may obtain (such as, download) the image or the video corresponding to the time stamp from the address. By this way, the user terminal may define any address, which is helpful to ensure the communication safety.

In a second way, the user terminal may receive a message indicating a content to be uploaded is successfully uploaded and an address of the content to be uploaded, in which the message may indicate the image or the video corresponding to the time stamp is successfully uploaded to the address by the photographic device, and the address is used for indicating a position of the image or the video corresponding to the time stamp and uploaded by the photographic device. Then, the user terminal may obtain (such as, download) the image or the video corresponding to the time stamp from the address. By this way, the procedure of obtaining the image or the video by the user terminal is simplified, such that the user terminal may obtain the image or the video corresponding to the time stamp more effectively and quickly.

In the present disclosure, the message indicating the content to be uploaded is successfully uploaded may be in a form of a short message, a notification message or a voice message, etc.

In conclusion, with the method for obtaining a video content, since the user terminal displays the video content with the resolution lower than the resolution of the video content photographed by the photographic device, the network traffic of the user terminal is reduced, and the cost is saved, also the transmission speed of the video is improved. Further, by sending the first request for obtaining the content to the photographic device, the user terminal may obtain the image or the video corresponding to the time stamp from the photographic device. And the resolution of the image or the video from the photographic device is higher than that of the video content currently displayed on the user terminal, such that the effect of obtaining the image or the video with a higher resolution at the moment or in the period which the user is interested in may be achieved when the user views the video content with a lower resolution.

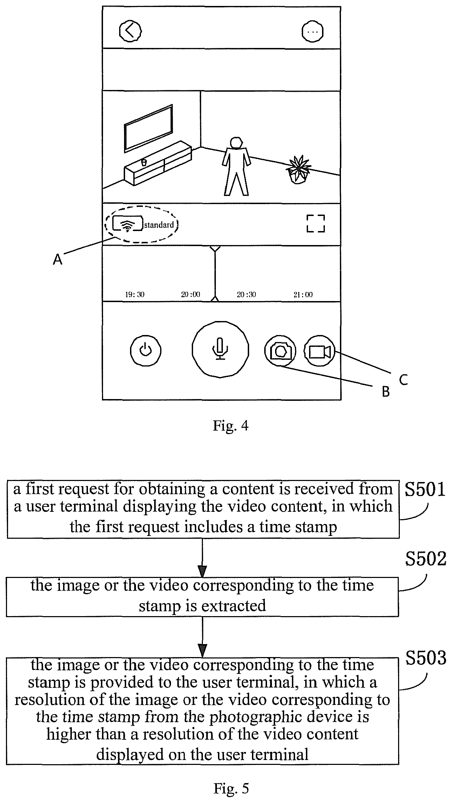

Fig. 4 is a schematic diagram of an interface of a user terminal when the method provided in the embodiment shown in Fig. 2 or 3 is implemented. For example, as shown in Fig. 4, the user may perform the second operation for selecting the resolution for the video to be displayed in a field A of the interface of the user terminal. For example, the user selects the "standard" resolution (i.e., 720p) as the resolution for the video to be displayed, so as to reduce the network traffic of the user terminal and improve the transmission speed of the video. After the user selects the "standard" resolution, the user terminal may display the video content corresponding to the standard resolution provided by the photographic device. During the display of the video content, the user may perform the operation for obtaining the image by clicking a field B on the interface of the user terminal. And then, the user terminal may obtain a corresponding high-definition image. Or, the user may perform the operation for obtaining the video by clicking a field C on the interface of the user terminal. And then, the user terminal may obtain a corresponding high-definition video.

Alternatively, after obtaining image or the video from the photographic device, the user terminal may display the image or the video. Thus, it is convenient for the user to view and to filter, delete, edit, or share the image or the video.

Fig. 5 is a flow chart showing a method for obtaining a video content according to an example embodiment. The method is applied in a photographic device, such as the photographic device 110 shown in Fig. 1. As shown in Fig. 5, the method includes the following steps.

In step S501, a first request for obtaining a content is received from a user terminal displaying the video content, in which the first request includes a time stamp and is configured to request for an image or a video corresponding to the time stamp from the photographic device photographing the video content.

In step S502, the image or the video corresponding to the time stamp is extracted. For example, the photographic device may resolve the time stamp form the first request for obtaining the content firstly, and then extracts the image or the video corresponding to the time stamp from the video content photographed.

In step S503, the image or the video corresponding to the time stamp is provided to the user terminal, in which a resolution of the image or the video from the photographic device is higher than a resolution of the video content currently displayed on the user terminal.

In an example, the image corresponding to the time stamp may include the image just at the moment indicated by the time stamp. For example, the time stamp is 20:30, the image corresponding to the time stamp may include the image at the moment 20:30.

Alternatively, the image corresponding to the time stamp may include the image just at the moment indicated by the time stamp, and images respectively at some moments before and/or after the moment indicated by the time stamp by several time units. For example, if the time stamp is 20:30, the images corresponding to the time stamp may include the image at the moment 20:30, an image at the moment 20:28, an image at the moment 20:29, and an image at the moment 20:31, and so on. In this way, the photographic device may provide some images to the user for selecting. The problem that the image which the user is interested in cannot be obtained due to the untimely first operation for obtaining the content is avoided.

In one example, the video corresponding to the time stamp may include one or more of: a video started from the time stamp and ended at a time which is some units (such as, 10 units) of time later than the time stamp; a video started from a time which is some units (such as, 10 units) of time earlier than the time stamp and ended at the time stamp; a video started from a time which is some units (such as, 5 units) of time earlier than the time stamp and ended at a time which is some units (such as, 5 units) of time later than time stamp, and so on.

As described with reference to Fig. 1, the photographic device may be an intelligent camera device or an intelligent camera with the storage function and the processing function. In this situation, the intelligent camera device or the intelligent camera may directly receive the first request for obtaining the content from the user terminal, directly extract the image or the video corresponding to the time stamp from the video content photographed, and directly provide the image or the video corresponding to the time stamp to the user terminal.

Alternatively, the photographic device may include a camera and a server connected to the camera, and the server is configured to store and process the video content photographed by the camera. In this situation, the photographic device may provide the image or the video corresponding to the time stamp in many ways.

For example, in a first way, the camera may directly receive the first request for obtaining the content from the user terminal, and then may transfer the first request to the server. Then, the server may extract the image or the video corresponding to the time stamp from the video content photographed by the camera. The server then sends the image or the video corresponding to the time stamp to the user terminal via the camera or via itself directly.

For example, in a second way, the server may directly receive the first request for obtaining the content from the user terminal, and extracts the image or the video corresponding to the time stamp from the video content photographed by the camera. The server then sends the image or the video corresponding to the time stamp to the user terminal via the camera or via itself directly.

The way of providing the image or the video corresponding to the time stamp to the user terminal by the photographic device is not limited to the above two ways.

When providing the image or the video corresponding to the time stamp to the user terminal, alternatively, the photographic device may directly send the image or the video corresponding to the time stamp and extracted from the video content photographed by the photographic device to the user terminal. Because, the resolution of the video content photographed by the photographic device is the highest one in the resolutions of the video contents that the photographic device may provide. The resolution of the video content currently displayed on the user terminal is lower than the resolution of the video content photographed by the photographic device, such that it is possible to make sure that the resolution of the image or the video provided to the user terminal is higher than that of the video content currently displayed on the user terminal.

The photographic device converts the resolution of the image or the video corresponding to the time stamp and extracted from the video content photographed by the photographic device (the operation may be performed in the intelligent camera device or the intelligent camera, or may be performed in the server in the photographic device), so as to decrease the resolution of the image or the video. However, the decreased resolution of the image or the video is still higher than the resolution of the video content currently displayed on the user terminal. And then, the image or the video corresponding to the time stamp and with the converted resolution is provided to the user terminal. In this way, the user may obtain the image or the video corresponding to the time stamp and with a higher resolution, as well as the network traffic of the user terminal is reduced to some extent, the cost is saved, and the transmission speed of the image or the video corresponding to the time stamp is improved.

In conclusion, with the method for obtaining a video content, by sending the first request for obtaining the content to the photographic device, the user terminal may obtain the image or the video corresponding to the time stamp from the photographic device, and the resolution of the image or the video from the photographic device is higher than the resolution of the video content currently displayed on the user terminal, such that the effect of obtaining image or the video with a higher resolution at the moment or in the period which the user is interested in may be achieved when the user views the video content with a lower resolution.

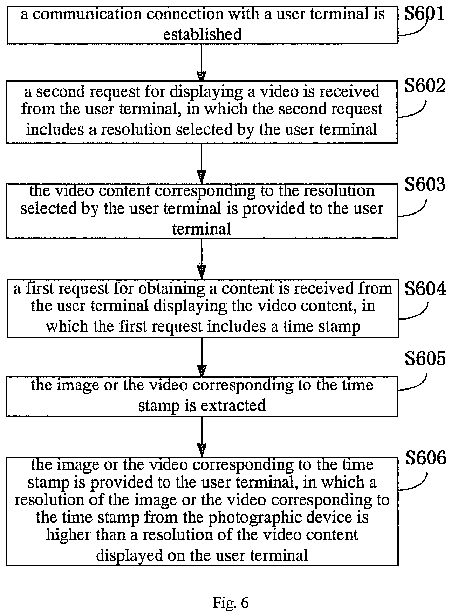

Fig. 6 is a flow chart showing a method for obtaining a video content according to another example embodiment. The method is applied in a photographic device, such as the photographic device 110 shown in Fig. 1. As shown in Fig. 6, the method includes the following steps.

In step S601, a communication connection with a user terminal is established. For example, the photographic device may establish the communication connection with the user terminal via a wireless or wired technology, such as WiFi, 2G, 3G, or 4G, etc.

In step S602, a second request for displaying a video is received from the user terminal, in which the second request includes a resolution selected by the user terminal and is configured to request for the video content corresponding to the resolution selected by the user terminal from the photographic device, and the resolution selected by the user terminal is lower than a resolution of the video content photographed by the photographic device.

In step S603, the video content corresponding to the resolution selected by the user terminal is provided to the user terminal.

For example, the video content photographed by the photographic device may have a high resolution. For example, the high resolution may be 1080p. The photographic device may store the video content with the high resolution at the time when the video content with the high resolution is photographed. Once the photographic device receives the second request for displaying a video which includes the resolution selected by the user terminal from the user terminal, the photographic device may convert the resolution of the video content photographed by itself to conform to the resolution selected by the user terminal. For example, the resolution selected by the user terminal is a standard resolution, such as 720p. The photographic device may compress the photographed high-definition video with a resolution 1080p, so as to convert the high-definition resolution into the resolution selected by the user terminal. And then the video content corresponding to the resolution selected by the user terminal is provided to the user terminal. In this way, the network traffic of the user terminal is reduced and the transmission speed of the video is improved.

As described with reference to Fig. 1, the photographic device may be an intelligent camera device or an intelligent camera with the storage function and the processing function. In this situation, the intelligent camera device or an intelligent camera compresses the video. Alternatively, the photographic device may include a camera and a server connected to the camera, and the server is configured to store and process the video content photographed by the camera. In this situation, the server compresses the video.

Alternatively, the photographic device always stores the video content with the high resolution, although it provides the video content with a standard resolution to the user terminal.

In step S604, a first request for obtaining a content is received from the user terminal displaying the video content, in which the first request includes a time stamp and is configured to request for an image or a video corresponding to the time stamp from the photographic device photographing the video content.

In step S605, the image or the video corresponding to the time stamp is extracted. For example, the photographic device may extract the image or the video corresponding to the time stamp from the stored video content with high-definition resolution.

In step S606, the image or the video corresponding to the time stamp is provided to the user terminal, in which a resolution of the image or the video corresponding to the time stamp from the photographic device is higher than a resolution of the video content displayed on the user terminal (i.e., the resolution selected by the user terminal).

The steps S604-S606 are the same to the steps S501-S503, which are not described herein.

In step S503 or step S606, the photographic device may provide the image or the video corresponding to the time stamp to the user terminal in many ways. For example, in a first way, the photographic device receives an address of a content to be uploaded from the user terminal, and then uploads the image or the video corresponding to the time stamp to the address. After the image or the video corresponding to the time stamp is successfully uploaded, a message indicating that the content to be uploaded is successfully uploaded is sent to the user terminal.

In a second way, the photographic device uploads the image or the video corresponding to the time stamp to an address of a content to be uploaded, in which the address is used for indicating a position of the image or the video corresponding to the time stamp and uploaded by the photographic device. After the image or the video corresponding to the time stamp is successfully uploaded, a message indicating that the content to be uploaded is successfully uploaded and the address are sent to the user terminal, such that the user terminal may obtain the image or the video corresponding to the time stamp from the address.

In the present disclosure, the message indicating the content to be uploaded is successfully uploaded may indicate that the image or the video corresponding to the time stamp is successfully uploaded to the address by the photographic device, and the message indicating the content to be uploaded is successfully uploaded may be in a form of a short message, a notification message or a voice message, etc.

In conclusion, with the method for obtaining a video content, since photographic device provides the video content with the resolution lower than the resolution of the video content photographed by the photographic device to the user terminal, the network traffic of the user terminal is reduced, and the cost is saved, also the transmission speed of the video is improved. Further, by sending the first request for obtaining the content to the photographic device, the user terminal may obtain the image or the video corresponding to the time stamp from the photographic device. And the resolution of the image or the video corresponding to the time stamp from the photographic device is higher than that of the video content currently displayed on the user terminal, such that the effect of obtaining the image or the video with a higher resolution at the moment or in the period which the user is interested in may be achieved, when the user views the video content with a lower resolution.

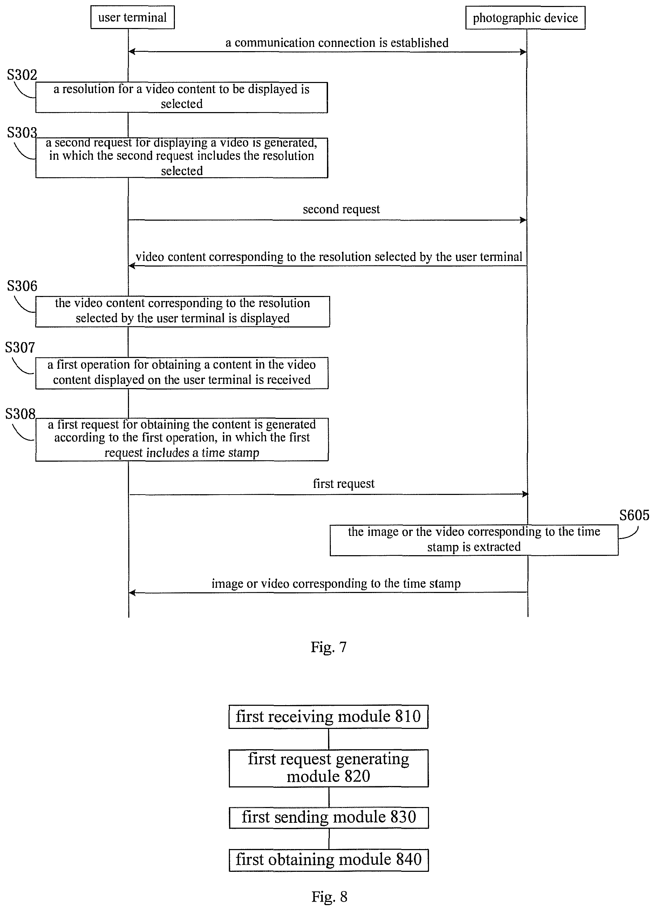

Fig. 7 is a schematic diagram showing a signaling interaction between the user terminal and the photographic device according to an example embodiment of the present disclosure. The user terminal is the user terminal 120 shown in Fig. 1. The photographic device is the photographic device 110 shown in Fig. 1. Fig. 7 refers to a part or all of the steps in one or more methods described above which are applied in the user terminal or the photographic device, such that the signaling interaction is not described herein.

Fig. 8 is a block diagram of an apparatus for obtaining a video content according to an example embodiment. The apparatus is configured in a user terminal, such as the user terminal 120 shown in Fig. 1. Referring to Fig. 8, the apparatus includes a first receiving module 810, configured to receive a first operation for obtaining a content in the video content displayed on the user terminal; a first request generating module 820, configured to generate a first request for obtaining the content according to the first operation, in which the first request includes a time stamp and is configured to request for an image or a video corresponding to the time stamp from a photographic device photographing the video content; a first sending module 830, configured to send the first request to the photographic device; and a first obtaining module 840, configured to obtain the image or the video corresponding to the time stamp from the photographic device, in which a resolution of the image or the video corresponding to the time stamp from the photographic device is higher than a resolution of the video content displayed on the user terminal.

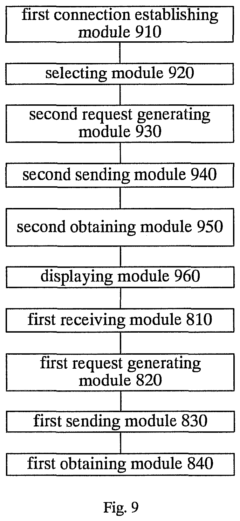

Fig. 9 is a block diagram of an apparatus for obtaining a video content according to another example embodiment. The apparatus is configured in a user terminal, such as the user terminal 120 shown in Fig. 1. Referring to Fig. 9, the apparatus further includes a first connection establishing module 910, configured to establish a communication connection with the photographic device; a selecting module 920, configured to select a resolution for a video content to be displayed, in which the resolution selected is lower than a resolution of the video content photographed by the photographic device; a second request generating module 930, configured to generate a second request for displaying a video, in which the second request includes the resolution selected and is configured to request for the video content corresponding to the resolution selected from the photographic device; a second sending module 940, configured to send the second request to the photographic device; a second obtaining module 950, configured to obtain the video content corresponding to the resolution selected from the photographic device; and a displaying module 960, configured to display the video content from the photographic device.

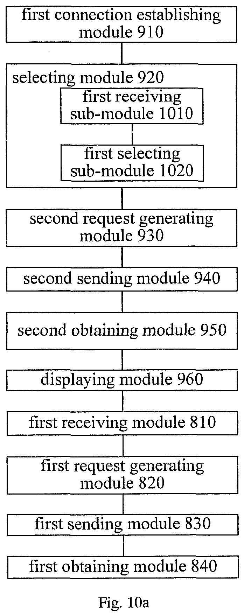

Figs. 10a-10b are block diagrams of an apparatus for obtaining a video content according to another example embodiment. The apparatus may be configured in a user terminal, such as the user terminal 120 shown in Fig. 1. Referring to Fig. 10a, alternatively, the selecting module 920 may include a first receiving sub-module 1010, configured to receive a second operation for selecting a resolution, in which the second operation is configured to indicate the resolution for the video content to be displayed; and a first selecting sub-module 1020, configured to select the resolution for the video content to be displayed according to the second operation.

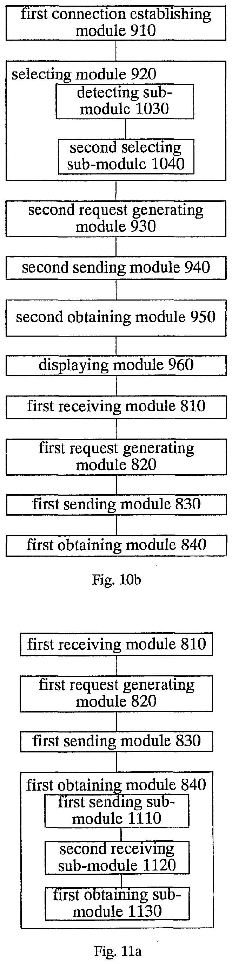

Alternatively, referring to Fig. 10b, the selecting module 920 may include: a detecting sub-module 1030, configured to detect a communication mode of the user terminal; and a second selecting sub-module 1040, configured to select the resolution for the video content to be displayed according to the communication mode.

Figs. 11a-11b are block diagrams of an apparatus for obtaining a video content according to another example embodiment. The apparatus may be configured in a user terminal, such as the user terminal 120 shown in Fig. 1. Referring to Fig. 11a, alternatively, the first obtaining module 840 may include: a first sending sub-module 1110, configured to send an address of a content to be uploaded to the photographic device, such that the photographic device uploads the image or the video corresponding to the time stamp to the address; a second receiving sub-module 1120, configured to receive a message indicating that the content to be uploaded is successfully uploaded from the photographic device; and a first obtaining sub-module 1130, configured to obtain the image or the video corresponding to the time stamp from the address.

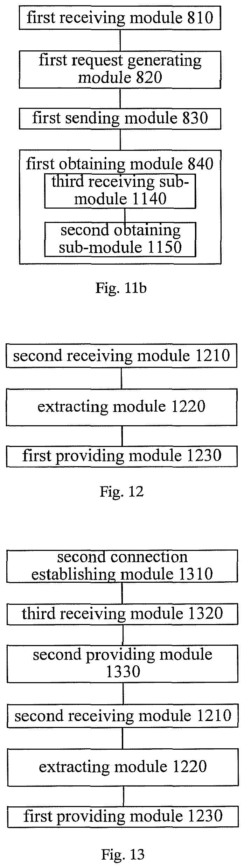

Alternatively, referring to Fig. 11b, the first obtaining module 840 may include: a third receiving sub-module 1140, configured to receive a message indicating that a content to be uploaded is successfully uploaded and an address of the content to be uploaded from the photographic device, in which the address indicates a position of the image or the video corresponding to the time stamp from the photographic device; and a second obtaining sub-module 1150, configured to obtain the image or the video corresponding to the time stamp from the address.

Fig. 12 is a block diagram of an apparatus for obtaining a video content according to an example embodiment. The apparatus is configured in a photographic device, such as the photographic device 110 shown in Fig. 1. Referring to Fig. 12, the apparatus includes: a second receiving module 1210, configured to receive a first request for obtaining a content from a user terminal displaying the video content, in which the first request includes a time stamp and is configured to request for an image or a video corresponding to the time stamp from the photographic device photographing the video content; an extracting module 1220, configured to extract the image or the video corresponding to the time stamp; and a first providing module 1230, configured to provide the image or the video corresponding to the time stamp to the user terminal, in which a resolution of the image or the video corresponding to the time stamp from the photographic device is higher than a resolution of the video content displayed on the user terminal.

Fig. 13 is a block diagram of an apparatus for obtaining a video content according to another example embodiment. The apparatus is configured in a photographic device, such as the photographic device 110 shown in Fig. 1. Referring to Fig. 13, the apparatus further includes:
a second connection establishing module 1310, configured to establish a communication connection with the user terminal; a third receiving module 1320, configured to receive a second request for displaying a video from the user terminal, in which the second request includes a resolution selected by the user terminal and is configured to request for the video content corresponding to the resolution selected by the user terminal from the photographic device, and the resolution selected by the user terminal is lower than a resolution of the video content photographed by the photographic device; and a second providing module 1330, configured to provide the video content corresponding to the resolution selected by the user terminal to the user terminal.

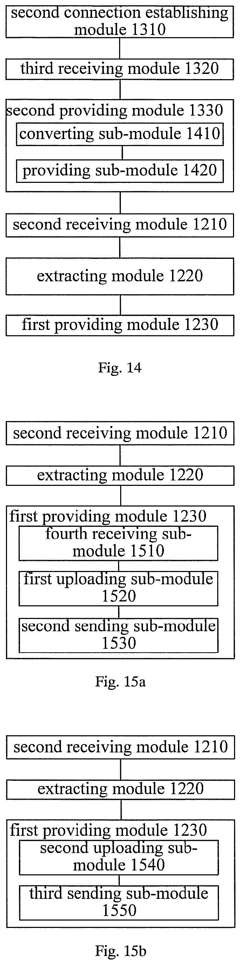

Fig. 14 is a block diagram of an apparatus for obtaining a video content according to another example embodiment. The apparatus may be configured in a photographic device, such as the photographic device 110 shown in Fig. 1. Referring to Fig. 14, alternatively, the second providing module 1330 may include: a converting sub-module 1410, configured to convert the resolution of the video content photographed by the photographic device so as to conform to the resolution selected by the user terminal; and a providing sub-module 1420, configured to provide the video content corresponding to the resolution selected by the user terminal to the user terminal.

Figs. 15a-15b are block diagrams of an apparatus for obtaining a video content according to another example embodiment. The apparatus may be configured in a photographic device, such as the photographic device 110 shown in Fig. 1. Referring to Fig. 15a, alternatively, the first providing module 1230 may include: a fourth receiving sub-module 1510, configured to receive an address of a content to be uploaded from the user terminal; a first uploading sub-module 1520, configured to upload the image or the video corresponding to the time stamp to the address; and a second sending sub-module 1530, configured to send a message indicating that the content to be uploaded is successfully uploaded to the user terminal.

Alternatively, referring to Fig. 15b, the first providing module 1230 may include: a second uploading sub-module 1540, configured to upload the image or the video corresponding to the time stamp to an address of a content to be uploaded, in which the address indicates a position of the image or the video corresponding to the time stamp from the photographic device; and a third sending sub-module 1550, configured to send a message indicating that the content to be uploaded is successfully uploaded and the address to the user terminal.

With respect to the apparatus in the above embodiments, the specific manners for performing operations for individual modules therein have been described in detail in the embodiments regarding the methods, which will not be elaborated herein.

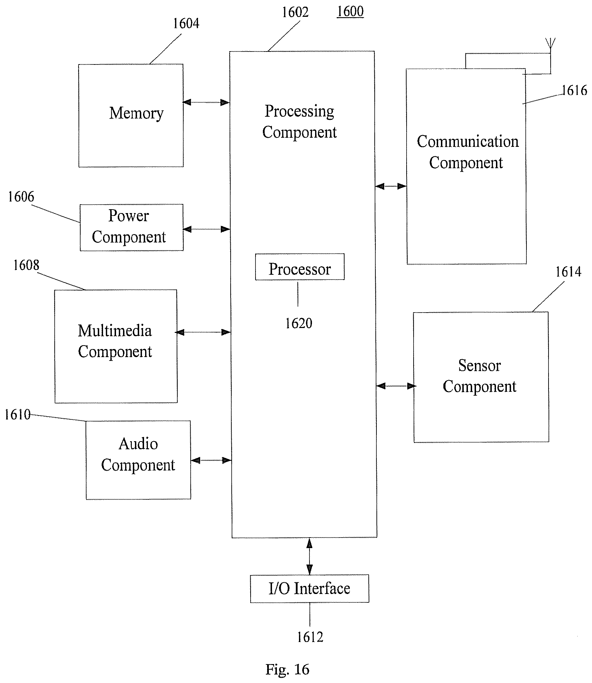

Fig. 16 is a block diagram of an apparatus 1600 for obtaining a video content according to an example embodiment. For example, the apparatus 1600 may be a mobile phone, a computer, a digital broadcast terminal, a messaging device, a gaming console, a tablet, a medical device, exercise equipment, a personal digital assistant, an intelligent camera device, an intelligent camera, and the like.

Referring to Fig. 16, the apparatus 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the apparatus 1600, such as the operations associated with display, telephone calls, data communications, camera operations, and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 908 and the processing component 1602.

The memory 1604 is configured to store various types of data to support the operation of the apparatus 1600. Examples of such data include instructions for any applications or methods operated on the device 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the apparatus 1600. The power component 1606 may include a power management system, one or more power sources, and any other components associated with the generation, management, and distribution of power in the apparatus 1600.

The multimedia component 1608 includes a screen providing an output interface between the apparatus 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and the rear camera may receive an external multimedia datum while the apparatus 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone ("MIC") configured to receive an external audio signal when the apparatus 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the apparatus 1600. For instance, the sensor component 1614 may detect an open/closed status of the apparatus 1600, relative positioning of components, e.g., the display and the keypad, of the apparatus 1600, a change in position of the apparatus 1600 or a component of the apparatus 1600, a presence or absence of user contact with the apparatus 1600, an orientation or an acceleration/deceleration of the apparatus 1600, and a change in temperature of the apparatus 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the apparatus 1600 and other devices. The apparatus 1600 can access a wireless network based on a communication standard, such as WiFi, 2G, or 3G, or a combination thereof. In one example embodiment, the communication component 1616 receives a broadcast signal or broadcast associated information from an external broadcast management system via a broadcast channel. In one example embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as included in the memory 1604, executable by the processor 1620 in the apparatus 1600, for performing the above-described methods. For example, the non-transitory computer-readable storage medium may be a ROM, a RAM, a CD-ROM, a magnetic tape, a floppy disc, an optical data storage device, and the like.

## Claims

1. A method for obtaining a video content, applied in a user terminal, comprising:
establishing (S301) a communication connection with a photographic device;
setting (S302) a second resolution for the video content, wherein the second resolution is lower than a third resolution used by the photographic device for photographing the video content;
generating (S303) a second request for displaying the video content, wherein the second request comprises the second resolution and is configured to request for the video content corresponding to the second resolution from the photographic device;
sending (S304) the second request to the photographic device;
obtaining (S305) the video content corresponding to the second resolution from the photographic device;
displaying (S306) the video content from the photographic device;
receiving (S201, S307), via an interface of the user terminal, a first operation for indicating an intention of obtaining a video or an image in the video content displayed on the user terminal;
generating (S202, S308) a first request for obtaining the video or the image according to the first operation, wherein the first request comprises a time stamp and is configured to request for the image or the video corresponding to the time stamp from the photographic device;
sending (S203, S309) the first request to the photographic device;
the method being **characterized in** the step of:
obtaining (S204, S310) and displaying the image or the video corresponding to the time stamp from the photographic device, wherein a first resolution of the image or the video from the photographic device is higher than the second resolution of the video content displayed on the user terminal and the first resolution is lower than the third resolution.

2. The method according to claim 1, wherein
setting (S302) a second resolution for the video content comprises:
receiving a second operation for selecting the second resolution, wherein the second operation is configured to indicate the second resolution for the video content; and
setting the second resolution for the video content according to the second operation;
or
setting (S302) a second resolution for the video content comprises:
detecting a communication mode of the user terminal; and
setting the second resolution for the video content according to the communication mode.

3. The method according to any of claims 1-2, wherein
obtaining (S204, S310) the image or the video corresponding to the time stamp from the photographic device comprises:
sending an address of the video or the image to be uploaded to the photographic device;
receiving a message indicating that the video or the image is successfully uploaded from the photographic device; and
obtaining the image or the video corresponding to the time stamp from the address; or
obtaining (S204, S310) the image or the video corresponding to the time stamp from the photographic device comprises:
receiving a message indicating that the video or the image is successfully uploaded and an address of the video or the image to be uploaded from the photographic device, wherein the address indicates a position of the image or the video corresponding to the time stamp from the photographic device; and
obtaining the image or the video corresponding to the time stamp from the address.

4. A method for obtaining a video content, applied in a photographic device, comprising:
establishing (S601) a communication connection with a user terminal;
receiving (S602) a second request for displaying the video content from the user terminal, wherein the second request comprises a second resolution and is configured to request for the video content corresponding to the second resolution from the photographic device, and the second resolution is lower than a third resolution used by the photographic device for photographing the video content;
providing (S603) the video content corresponding to the second resolution to the user terminal;
receiving (S501, S604) a first request for obtaining a video or an image from the user terminal, wherein the first request comprises a time stamp and is configured to request for the image or the video corresponding to the time stamp from the photographic device;
extracting (S502, S605) the image or the video corresponding to the time stamp;
the method being **characterized in** the step of:
providing (S503, S606) the image or the video corresponding to the time stamp to the user terminal, wherein a first resolution of the image or the video corresponding to the time stamp from the photographic device is higher than the second resolution of the video content displayed on the user terminal and the first resolution is lower than the third resolution.

5. The method according to claim 4, wherein providing (S603) the video content corresponding to the second resolution to the user terminal comprises:
converting video content corresponding to the third resolution used by the photographic device for photographing the video content so as to obtain video content corresponding to the second resolution; and
providing the video content corresponding to the second resolution to the user terminal.

6. The method according to any of claims 4-5, wherein
providing (S503, S606) the image or the video corresponding to the time stamp to the user terminal comprises:
receiving an address of the image or the video to be uploaded from the user terminal;
uploading the image or the video corresponding to the time stamp to the address; and
sending a message indicating that the image or the video is successfully uploaded to the user terminal;
or
providing (S503, S606) the image or the video corresponding to the time stamp to the user terminal comprises:
uploading the image or the video corresponding to the time stamp to an address of the image or the video to be uploaded, wherein the address indicates a position of the image or the video corresponding to the time stamp from the photographic device; and
sending a message indicating that the image or the video is successfully uploaded and the address to the user terminal.

7. An apparatus for obtaining a video content, included in a user terminal, comprising:
a first connection establishing module (910), configured to establish a communication connection with a photographic device;
a setting module (920), configured to set a second resolution for the video content, wherein the second resolution is lower than a third resolution used by the photographic device for photographing the video content;
a second request generating module (930), configured to generate a second request for displaying the video content, wherein the second request comprises the second resolution and is configured to request for the video content corresponding to the second resolution from the photographic device;
a second sending module (940), configured to send the second request to the photographic device;
a second obtaining module (950), configured to obtain the video content corresponding to the second resolution from the photographic device;
a displaying module (960), configured to display the video content from the photographic device;
a first receiving module (810), configured to receive, via an interactive interface of the user terminal, a first operation for indicating an intention of obtaining a video or an image in the video content displayed on the user terminal;
a first request generating module (820), configured to generate a first request for obtaining the video or the image according to the first operation, wherein the first request comprises a time stamp and is configured to request for the image or the video corresponding to the time stamp from the photographic device;
a first sending module (830), configured to send the first request to the photographic device; and **characterized in**:
a first obtaining module (840), configured to obtain the image or the video corresponding to the time stamp from the photographic device, wherein a first resolution of the image or the video corresponding to the time stamp from the photographic device is higher than the second resolution of the video content displayed on the user terminal and the first resolution is lower than the third resolution;
wherein the displaying module (960) is further configured to display the image or the video corresponding to the first resolution.

8. An apparatus for obtaining a video content, included in a photographic device, comprising:
a second connection establishing module (1310), configured to establish a communication connection with a user terminal;
a third receiving module (1320), configured to receive a second request for displaying the video content from the user terminal, wherein the second request comprises the second resolution and is configured to request for the video content corresponding to the second resolution from the photographic device, and the second resolution is lower than a third resolution used by the photographic device for photographing the video content;
a second providing module (1330), configured to provide the video content corresponding to the second resolution to the user terminal;
a second receiving module (1210), configured to receive a first request for obtaining a video or an image from the user terminal, wherein the first request comprises a time stamp and is configured to request for the image or the video corresponding to the time stamp from the photographic device;
an extracting module (1220), configured to extract the image or the video corresponding to the time stamp;
and **characterized in**:
a first providing module (1230), configured to provide the image or the video corresponding to the time stamp to the user terminal, wherein a first resolution of the image or the video corresponding to the time stamp from the photographic device is higher than the second resolution of the video content displayed on the user terminal and the first resolution is lower than the third resolution.

9. A computer program including instructions for executing the steps of a method for obtaining a video content according to any one of claims 1 to 6 when said program is executed by a computer.

10. A recording medium readable by a computer and having recorded thereon a computer program including instructions for executing the steps of a method for obtaining a video content according to any one of claims 1 to 6.

## Patentansprüche

1. Verfahren zum Erlangen eines Videoinhalts, das bei einem Benutzerendgerät angewendet wird, umfassend:
Herstellen (S301) einer Kommunikationsverbindung mit einem Fotogerät,
Einstellen (S302) einer zweiten Auflösung für den Videoinhalt, wobei die zweite Auflösung niedriger als eine dritte Auflösung ist, die von dem Fotogerät zum Fotografieren des Videoinhalts verwendet wird,
Erzeugen (S303) einer zweiten Anforderung zum Anzeigen des Videoinhalts, wobei die zweite Anforderung die zweite Auflösung umfasst und dazu ausgestaltet ist, den Videoinhalt, der der zweiten Auflösung entspricht, von dem Fotogerät anzufordern,
Senden (S304) der zweiten Anforderung an das Fotogerät,
Erlangen (S305) des Videoinhalts, der der zweiten Auflösung entspricht, von dem Fotogerät,
Anzeigen (S306) des Videoinhalts von dem Fotogerät,
Empfangen (S201, S307) einer ersten Operation zum Angeben einer Absicht, ein Video oder ein Bild in dem Videoinhalt, der auf dem Benutzerendgerät angezeigt wird, zu erlangen, über eine Schnittstelle des Benutzerendgeräts,
Erzeugen (S202, S308) einer ersten Anforderung zum Erlangen des Videos oder des Bildes gemäß der ersten Operation, wobei die erste Anforderung einen Zeitstempel umfasst und dazu ausgestaltet ist, das Bild oder das Video, das dem Zeitstempel entspricht, von dem Fotogerät anzufordern,
Senden (S203, S309) der ersten Anforderung an das Fotogerät,
wobei das Verfahren **gekennzeichnet ist durch** den Schritt des:
Erlangens (S204, S310) und Anzeigens des Bildes oder des Videos, das dem Zeitstempel entspricht, von dem Fotogerät, wobei eine erste Auflösung des Bildes oder des Videos von dem Fotogerät höher als die zweite Auflösung des Videoinhalts ist, der auf dem Benutzerendgerät angezeigt wird, und die erste Auflösung niedriger als die dritte Auflösung ist.

2. Verfahren nach Anspruch 1, wobei
das Einstellen (S302) einer zweiten Auflösung für den Videoinhalt umfasst:
Empfangen einer zweiten Operation zum Auswählen der zweiten Auflösung, wobei die zweite Operation dazu ausgestaltet ist, die zweite Auflösung für den Videoinhalt anzugeben, und
Einstellen der zweiten Auflösung für den Videoinhalt gemäß der zweiten Operation, oder
das Einstellen (S302) einer zweiten Auflösung für den Videoinhalt umfasst:
Erfassen eines Kommunikationsmodus des Benutzerendgeräts, und
Einstellen der zweiten Auflösung für den Videoinhalt gemäß dem Kommunikationsmodus.

3. Verfahren nach einem der Ansprüche 1-2, wobei
das Erlangen (S204, S310) des Bildes oder des Videos, das dem Zeitstempel entspricht, von dem Fotogerät umfasst:
Senden einer Adresse des Videos oder des Bildes, das auf das Fotogerät hochzuladen ist,
Empfangen einer Nachricht, die angibt, dass das Video oder das Bild erfolgreich von dem Fotogerät hochgeladen wurde, und
Erlangen des Bildes oder des Videos, das dem Zeitstempel entspricht, von der Adresse, oder
das Erlangen (S204, S310) des Bildes oder des Videos, das dem Zeitstempel entspricht, von dem Fotogerät umfasst:
Empfangen einer Nachricht, die angibt, dass das Video oder das Bild erfolgreich hochgeladen wurde, und einer Adresse des Videos oder des Bildes, das von dem Fotogerät hochzuladen ist, wobei die Adresse eine Position des Bildes oder des Videos, das dem Zeitstempel entspricht, von dem Fotogerät angibt, und
Erlangen des Bildes oder des Videos, das dem Zeitstempel entspricht, von der Adresse.

4. Verfahren zum Erlangen eines Videoinhalts, das bei einem Fotogerät angewendet wird, umfassend:
Herstellen (S601) einer Kommunikationsverbindung mit einem Benutzerendgerät,
Empfangen (S602) einer zweiten Anforderung zum Anzeigen des Videoinhalts von dem Benutzerendgerät, wobei die zweite Anforderung eine zweite Auflösung umfasst und dazu ausgestaltet ist, den Videoinhalt entsprechend der zweiten Auflösung von dem Fotogerät anzufordern, und die zweite Auflösung niedriger als eine dritte Auflösung ist, die von dem Fotogerät zum Fotografieren des Videoinhalts verwendet wird,
Bereitstellen (S603) des Videoinhalts, der der zweiten Auflösung entspricht, an das Benutzerendgerät,
Empfangen (S501, S604) einer ersten Anforderung zum Erlangen eines Videos oder eines Bildes von dem Benutzerendgerät, wobei die erste Anforderung einen Zeitstempel umfasst und dazu ausgestaltet ist, das Bild oder das Video, das dem Zeitstempel entspricht, von dem Fotogerät anzufordern,
Extrahieren (S502, S605) des Bildes oder des Videos, das dem Zeitstempel entspricht,
wobei das Verfahren **gekennzeichnet ist durch** den Schritt des:
Bereitstellens (S503, S606) des Bildes oder des Videos, das dem Zeitstempel entspricht, an das Benutzerendgerät, wobei eine erste Auflösung des Bildes oder des Videos, das dem Zeitstempel entspricht, von dem Fotogerät höher als die zweite Auflösung des Videoinhalts ist, der auf dem Benutzerendgerät angezeigt wird, und die erste Auflösung niedriger als die dritte Auflösung ist.

5. Verfahren nach Anspruch 4, wobei das Bereitstellen (S603) des Videoinhalts, der der zweiten Auflösung entspricht, an das Benutzerendgerät umfasst:
Konvertieren von Videoinhalt, der der dritten Auflösung entspricht, die von dem Fotogerät zum Fotografieren des Videoinhalts verwendet wird, um so Videoinhalt zu erlangen, der der zweiten Auflösung entspricht, und
Bereitstellen des Videoinhalts, der der zweiten Auflösung entspricht, an das Benutzerendgerät.

6. Verfahren nach einem der Ansprüche 4-5, wobei
das Bereitstellen (S503, S606) des Bildes oder des Videos, das dem Zeitstempel entspricht, an das Benutzerendgerät umfasst:
Empfangen einer Adresse des Bildes oder des Videos, das hochzuladen ist, von dem Benutzerendgerät,
Hochladen des Bildes oder des Videos, das dem Zeitstempel entspricht, auf die Adresse, und
Senden einer Nachricht, die angibt, dass das Bild oder das Video erfolgreich auf das Benutzerendgerät hochgeladen wurde, oder
das Bereitstellen (S503, S606) des Bildes oder des Videos, das dem Zeitstempel entspricht, an das Benutzerendgerät umfasst:
Hochladen des Bildes oder des Videos, das dem Zeitstempel entspricht, auf eine Adresse des Bildes oder des Videos, das hochzuladen ist, wobei die Adresse eine Position des Bildes oder des Videos, die dem Zeitstempel entspricht, von dem Fotogerät angibt, und
Senden einer Nachricht, die angibt, dass das Bild oder das Video erfolgreich hochgeladen wurde, und der Adresse an das Benutzerendgerät.

7. Vorrichtung zum Erlangen eines Videoinhalts, die in einem Benutzerendgerät enthalten ist, umfassend:
ein erstes Verbindungsherstellungsmodul (910), das dazu ausgestaltet ist, eine Kommunikationsverbindung mit einem Fotogerät herzustellen,
ein Einstellmodul (920), das dazu ausgestaltet ist, eine zweite Auflösung für den Videoinhalt einzustellen, wobei die zweite Auflösung niedriger als eine dritte Auflösung ist, die von dem Fotogerät zum Fotografieren des Videoinhalts verwendet wird,
ein zweites Anforderungserzeugungsmodul (930), das dazu ausgestaltet ist, eine zweite Anforderung zum Anzeigen des Videoinhalts zu erzeugen, wobei die zweite Anforderung die zweite Auflösung umfasst und dazu ausgestaltet ist, den Videoinhalt, der der zweiten Auflösung entspricht, von dem Fotogerät anzufordern,
ein zweites Sendemodul (940), das dazu ausgestaltet ist, die zweite Anforderung an das Fotogerät zu senden,
ein zweites Erlangungsmodul (950), das dazu ausgestaltet ist, den Videoinhalt, der der zweiten Auflösung entspricht, von dem Fotogerät zu erlangen,
ein Anzeigemodul (960), das dazu ausgestaltet ist, den Videoinhalt von dem Fotogerät anzuzeigen,
ein erstes Empfangsmodul (810), das dazu ausgestaltet ist, über eine interaktive Schnittstelle des Benutzerendgeräts eine erste Operation zu empfangen, um eine Absicht anzuzeigen, ein Video oder ein Bild in dem Videoinhalt, der auf dem Benutzerendgerät angezeigt wird, zu erlangen,
ein erstes Anforderungserzeugungsmodul (820), das dazu ausgestaltet ist, eine erste Anforderung zum Erlangen des Videos oder des Bildes gemäß der ersten Operation zu erzeugen, wobei die erste Anforderung einen Zeitstempel umfasst und dazu ausgestaltet ist, das Bild oder das Video, das dem Zeitstempel entspricht, von dem Fotogerät anzufordern,
ein erstes Sendemodul (830), das dazu ausgestaltet ist, die erste Anforderung an das Fotogerät zu senden,
und **gekennzeichnet durch**:
ein erstes Erlangungsmodul (840), das dazu ausgestaltet ist, das Bild oder das Video, das dem Zeitstempel entspricht, von dem Fotogerät zu erlangen, wobei eine erste Auflösung des Bildes oder des Videos, das dem Zeitstempel entspricht, von dem Fotogerät höher als die zweite Auflösung des Videoinhalts ist, der auf dem Benutzerendgerät angezeigt wird, und die erste Auflösung niedriger als die dritte Auflösung ist,
wobei das Anzeigemodul (960) ferner dazu ausgestaltet ist, das Bild oder das Video anzuzeigen, das der ersten Auflösung entspricht.

8. Vorrichtung zum Erlangen eines Videoinhalts, die in einem Fotogerät enthalten ist, umfassend:
ein zweites Verbindungsherstellungsmodul (1310), das dazu ausgestaltet ist, eine Kommunikationsverbindung mit einem Benutzerendgerät herzustellen,
ein drittes Empfangsmodul (1320), das dazu ausgestaltet ist, eine zweite Anforderung zum Anzeigen des Videoinhalts von dem Benutzerendgerät zu empfangen, wobei die zweite Anforderung die zweite Auflösung umfasst und dazu ausgestaltet ist, den Videoinhalt, der der zweiten Auflösung entspricht, von dem Fotogerät anzufordern, und die zweite Auflösung niedriger als eine dritte Auflösung ist, die von dem Fotogerät zum Fotografieren des Videoinhalts verwendet wird,
ein zweites Bereitstellungsmodul (1330), das dazu ausgestaltet ist, den Videoinhalt, der der zweiten Auflösung entspricht, an das Benutzerendgerät bereitzustellen,
ein zweites Empfangsmodul (1210), das dazu ausgestaltet ist, eine erste Anforderung zum Erlangen eines Videos oder eines Bildes von dem Benutzerendgerät zu empfangen, wobei die erste Anforderung einen Zeitstempel umfasst und dazu ausgestaltet ist, das Bild oder das Video, das dem Zeitstempel entspricht, von dem Fotogerät anzufordern,
ein Extraktionsmodul (1220), das dazu ausgestaltet ist, das Bild oder das Video, das dem Zeitstempel entspricht, zu extrahieren,
und **gekennzeichnet durch**:
ein erstes Bereitstellungsmodul (1230), das dazu ausgestaltet ist, das Bild oder das Video, das dem Zeitstempel entspricht, an das Benutzerendgerät bereitzustellen, wobei eine erste Auflösung des Bildes oder des Videos, das dem Zeitstempel entspricht, von dem Fotogerät höher als die zweite Auflösung des Videoinhalts ist, der auf dem Benutzerendgerät angezeigt wird, und die erste Auflösung niedriger als die dritte Auflösung ist.

9. Computerprogramm, das Anweisungen zum Ausführen der Schritte eines Verfahrens zum Erlangen eines Videoinhalts nach einem der Ansprüche 1 bis 6 enthält, wenn das Programm von einem Computer ausgeführt wird.

10. Aufzeichnungsmedium, das von einem Computer gelesen werden kann und auf welchem ein Computerprogramm aufgezeichnet ist, das Anweisungen zum Ausführen der Schritte eines Verfahrens zum Erlangen eines Videoinhalts nach einem der Ansprüche 1 bis 6 enthält.

## Revendications

1. Procédé d'obtention d'un contenu vidéo, appliqué dans un terminal utilisateur, comprenant :
l'établissement (S301) d'une connexion de communication avec un dispositif photographique ;
la définition (S302) d'une seconde résolution pour le contenu vidéo, dans lequel la seconde résolution est inférieure à une troisième résolution utilisée par le dispositif photographique destiné à photographier le contenu vidéo ;
la génération (S303) d'une seconde requête d'affichage du contenu vidéo, dans lequel la seconde requête comprend la seconde résolution et est configurée pour demander le contenu vidéo qui correspond à la seconde résolution au dispositif photographique ;
l'envoi (S304) de la seconde requête au dispositif photographique ;
l'obtention (S305) du contenu vidéo qui correspond à la seconde résolution de la part du dispositif photographique ;
l'affichage (S306) du contenu vidéo du dispositif photographique ;
la réception (S210, S307), via une interface du terminal utilisateur, d'une première opération destinée à indiquer une intention d'obtenir une vidéo ou une image dans le contenu vidéo affiché sur le terminal utilisateur ;
la génération (S202, S308) d'une première requête destinée à obtenir la vidéo ou l'image selon la première opération, dans lequel la première requête comprend un horodatage et est configurée pour demander l'image ou la vidéo qui correspond à l'horodatage au dispositif photographique ;
l'envoi (S203, S309) de la première requête au dispositif photographique ;
le procédé étant **caractérisé par** l'étape :
d'obtention (S204, S310) et d'affichage de l'image ou de la vidéo qui correspond à l'horodatage de la part du dispositif photographique, dans lequel une première résolution de l'image ou de la vidéo du dispositif photographique est supérieure à la seconde résolution du contenu vidéo affiché sur le terminal utilisateur et la première résolution est inférieure à la troisième résolution.

2. Procédé selon la revendication 1, dans lequel
la définition (S302) d'une seconde résolution pour le contenu vidéo comprend :
la réception d'une seconde opération destinée à sélectionner la seconde résolution, dans lequel la seconde opération est configurée pour indiquer la seconde résolution pour le contenu vidéo ; et
la définition de la seconde résolution pour le contenu vidéo selon la seconde opération ;
ou
la définition (S302) d'une seconde résolution pour le contenu vidéo comprend :
la détection d'un mode de communication du terminal utilisateur ; et
la définition de la seconde résolution pour le contenu vidéo selon le mode de communication.

3. Procédé selon l'une quelconque des revendications 1 à 2, dans lequel
l'obtention (S204, S310) de l'image ou de la vidéo qui correspond à l'horodatage de la part du dispositif photographique comprend :
l'envoi d'une adresse de la vidéo ou de l'image à charger au dispositif photographique ;
la réception d'un message qui indique que la vidéo ou l'image a été correctement chargée de la part du dispositif photographique ; et
l'obtention de l'image ou de la vidéo qui correspond à l'horodatage à partir de l'adresse ;
ou
l'obtention (S204, S310) de l'image ou de la vidéo qui correspond à l'horodatage de la part du dispositif photographique comprend :
la réception d'un message qui indique que la vidéo ou l'image a été correctement chargée et d'une adresse de la vidéo ou de l'image à charger de la part du dispositif photographique, dans lequel l'adresse indique une position de l'image ou de la vidéo qui correspond à l'horodatage fournie par le dispositif photographique ; et
l'obtention de l'image ou de la vidéo qui correspond à l'horodatage à partir de l'adresse.

4. Procédé d'obtention d'un contenu vidéo, appliqué dans un dispositif photographique, comprenant :
l'établissement (S601) d'une connexion de communication avec un terminal utilisateur ;
la réception (S602) d'une seconde requête destinée à afficher le contenu vidéo de la part du terminal utilisateur, dans lequel la seconde requête comprend une seconde résolution et est configurée pour demander le contenu vidéo qui correspond à la seconde résolution au dispositif photographique, et la seconde résolution est inférieure à une troisième résolution utilisée par le dispositif photographique pour photographier le contenu vidéo ;
la fourniture (S603) du contenu vidéo qui correspond à la seconde résolution au terminal utilisateur ;
la réception (S501, S604), d'une première requête destinée à obtenir une vidéo ou une image de la part du terminal utilisateur, dans lequel la première requête comprend un horodatage et est configurée pour demander l'image ou la vidéo qui correspond à l'horodatage au dispositif photographique ;
l'extraction (S502, S605) de l'image ou de la vidéo qui correspond à l'horodatage ;
le procédé étant **caractérisé par** l'étape :
de fourniture (S503, S606) de l'image ou de la vidéo qui correspond à l'horodatage au terminal utilisateur, dans lequel une première résolution de l'image ou de la vidéo qui correspond à l'horodatage fournie par le dispositif photographique est supérieure à la seconde résolution du contenu vidéo affiché sur le terminal utilisateur et la première résolution est inférieure à la troisième résolution.

5. Procédé selon la revendication 4, dans lequel la fourniture (S603) du contenu vidéo qui correspond à la seconde résolution au terminal utilisateur comprend :
la conversion du contenu vidéo qui correspond à la troisième résolution utilisée par le dispositif photographique pour photographier le contenu vidéo de façon à obtenir un contenu vidéo qui correspond à la seconde résolution ; et
la fourniture du contenu vidéo qui correspond à la seconde résolution au terminal utilisateur.

6. Procédé selon l'une quelconque des revendications 4 à 5, dans lequel
la fourniture (S503, S606) de l'image ou de la vidéo qui correspond à l'horodatage au terminal utilisateur comprend :
la réception d'une adresse de l'image ou de la vidéo à charger de la part du terminal utilisateur ;
le chargement de l'image ou de la vidéo qui correspond à l'horodatage vers l'adresse ; et
l'envoi d'un message qui indique que l'image ou la vidéo a été chargée au terminal utilisateur ;
ou
la fourniture (S503, S606) de l'image ou de la vidéo qui correspond à l'horodatage au terminal utilisateur comprend :
le chargement de l'image ou de la vidéo qui correspond à l'horodatage vers une adresse de l'image ou de la vidéo à charger, dans lequel l'adresse indique une position de l'image ou de la vidéo qui correspond à l'horodatage fournie par le dispositif photographique ; et
l'envoi d'un message qui indique que l'image ou la vidéo a été chargée et de l'adresse au terminal utilisateur.

7. Appareil destiné à obtenir un contenu vidéo, inclus dans un terminal utilisateur, comprenant :
un premier module d'établissement de connexion (910), configuré pour établir une connexion de communication avec un dispositif photographique ;
un module de définition (920), configuré pour définir une seconde résolution pour le contenu vidéo, dans lequel la seconde résolution est inférieure à une troisième résolution utilisée par le dispositif photographique pour photographier le contenu vidéo ;
un second module de génération de requête (930), configuré pour générer une seconde requête destinée à afficher le contenu vidéo, dans lequel la seconde requête comprend la seconde résolution et est configurée pour demander le contenu vidéo qui correspond à la seconde résolution au dispositif photographique ;
un second module d'envoi (940), configuré pour envoyer la seconde requête au dispositif photographique ;
un second module d'obtention (950), configuré pour obtenir le contenu vidéo qui correspond à la seconde résolution de la part du dispositif photographique ;
un module d'affichage (960), configuré pour afficher le contenu vidéo fourni par le dispositif photographique ;
un premier module de réception (810), configuré pour recevoir, via une interface interactive du terminal utilisateur, une première opération destinée à indiquer une intention d'obtenir une vidéo ou une image dans le contenu vidéo affiché sur le terminal utilisateur ;
un premier module de génération de requête (820), configuré pour générer une première requête destinée à obtenir la vidéo ou l'image selon la première opération, dans lequel la première requête comprend un horodatage et est configurée pour demander l'image ou la vidéo qui correspond à l'horodatage au dispositif photographique ;
un premier module d'envoi (830), configuré pour envoyer la première requête au dispositif photographique ;
et **caractérisé par** :
un premier module d'obtention (840), configuré pour obtenir l'image ou la vidéo qui correspond à l'horodatage de la part du dispositif photographique, dans lequel une première résolution de l'image ou de la vidéo qui correspond à l'horodatage fourni par le dispositif photographique est supérieure à la seconde résolution du contenu vidéo affiché sur le terminal utilisateur et la première résolution est inférieure à la troisième résolution ;
dans lequel le module d'affichage (960) est en outre configuré pour afficher l'image ou la vidéo qui correspond à la première résolution.

8. Appareil destiné à obtenir un contenu vidéo, inclus un dispositif photographique, comprenant :
un second module d'établissement de connexion (1310), configuré pour établir une connexion de communication avec un terminal utilisateur ;
un troisième module de réception (1320), configuré pour recevoir une seconde requête destinée à afficher le contenu vidéo de la part du terminal utilisateur, dans lequel la seconde requête comprend la seconde résolution et est configurée pour demander le contenu vidéo qui correspond à la seconde résolution au dispositif photographique, et la seconde résolution est inférieure à une troisième résolution utilisée par le dispositif photographique pour photographier le contenu vidéo ;
un second module de fourniture (1330), configuré pour fournir le contenu vidéo qui correspond à la seconde résolution au terminal utilisateur ;
un second module de réception (1210), configuré pour recevoir une première requête destinée à obtenir une vidéo ou une image de la part du terminal utilisateur, dans lequel la première requête comprend un horodatage et est configurée pour demander l'image ou la vidéo qui correspond à l'horodatage au dispositif photographique ;
un module d'extraction (1220), configuré pour extraire l'image ou la vidéo qui correspond à l'horodatage ;
et **caractérisé par** :
un premier module de fourniture (1230), configuré pour fournir l'image ou la vidéo qui correspond à l'horodatage au terminal utilisateur, dans lequel une première résolution de l'image ou de la vidéo qui correspond à l'horodatage fourni par le dispositif photographique est supérieure à la seconde résolution du contenu vidéo affiché sur le terminal utilisateur et la première résolution est inférieure à la troisième résolution.

9. Programme informatique comprenant des instructions destinées à exécuter les étapes d'un procédé d'obtention d'un contenu vidéo selon l'une quelconque des revendications 1 à 6 lorsque ledit programme est exécuté par un ordinateur.

10. Support d'enregistrement lisible par un ordinateur et stockant un programme informatique contenant des instructions destinées à exécuter les étapes d'un procédé d'obtention d'un contenu vidéo selon l'une quelconque des revendications 1 à 6.
